# EUROPÄISCHE PATENTSCHRIFT

(11) **EP 4 153 943 B1**
(45) Veröffentlichungstag und Bekanntmachung des Hinweises auf die Patenterteilung: **17.12.2025**
(21) Anmeldenummer: 21725712.0
(22) Anmeldetag: 04.05.2021
(51) Int. Cl.: G01C 21/30, G01S 19/40, G08G 1/133, G05D 1/00

(54) **VERFAHREN ZUM ERMITTELN EINER AUSGANGSPOSE EINES FAHRZEUGS**
METHOD FOR DETERMINING A STARTING POSE OF A VEHICLE
PROCÉDÉ POUR DÉTERMINER LA POSE INITIALE D'UN VÉHICULE

(30) Priorität: 20.05.2020 DE 102020206356
(43) Veröffentlichungstag der Anmeldung: 29.03.2023
(73) Patentinhaber: Robert Bosch GmbH, 70442 Stuttgart (DE)
(72) Erfinder: LI, Renlin, 74080 Heilbronn (DE); KRAUSE, Georg, 71634 Ludwigsburg (DE); NACHSTEDT, Timo, 71726 Benningen (DE)
(86) Internationale Anmeldenummer: PCT/EP2021/061645
(87) Internationale Veröffentlichungsnummer: WO 2021/233674

(56) Entgegenhaltungen:
- US-A1- 2018 143 647
- US-A1- 2018 307 941

## Beschreibung

Die Erfindung betrifft ein Verfahren zum Ermitteln einer Ausgangspose eines Fahrzeugs. Des Weiteren betrifft die Erfindung ein Steuergerät, ein Computerprogramm sowie ein maschinenlesbares Speichermedium.

### Stand der Technik

Für die Umsetzung von automatisierten Fahrfunktionen ist der Einsatz von hochpräzisen digitalen Karten essentiell. Derartige Karten können die sensorbasierte Umfeldwahrnehmung eines automatisiert betreibbaren Fahrzeugs vervollständigen. Es sind bereits unterschiedliche digitale Karten bekannt, welche beispielsweise geografische Straßenverläufe und typische Trajektorien von Verkehrsteilnehmern beinhalten. Die typischen Trajektorien können dabei aus sogenannten Schwarmtrajektorien einer Vielzahl von Fahrzeugen extrahiert werden.

Für die Nutzung der digitalen Karten muss das Fahrzeug seine eigene Pose, welche aus einer Position und einer Ausrichtung des Fahrzeugs besteht, präzise bestimmen können. Beispielsweise kann die Pose des Fahrzeugs durch Auswerten von GNSS-Signalen von entsprechenden Satelliten ermittelt werden. Eine GNSS-basierte Lokalisierung weist jedoch eine unzureichende Verfügbarkeit und Genauigkeit auf.

Üblicherweise werden iterative Lokalisierungsverfahren zum Bestimmen der Pose verwendet, die eine präzise Initialposition bzw. Ausgangsposition benötigen. Zum Ermitteln der Ausgangsposition bzw. Ausgangspose kann das Fahrzeug näherungsweise lokalisiert und die Pose anschließend durch ein merkmalsbasiertes Lokalisieren, beispielsweise durch Radarmessdaten, verfeinert werden. Bei der merkmalsbasierten Lokalisierung werden aus den Radarmessdaten statische Merkmale extrahiert und mit in einer Merkmalskarte hinterlegten Merkmalen verglichen. Hierzu wird beispielsweise ein mehrdimensionaler Bergsteigeralgorithmus eingesetzt, um eine optimale Ausrichtung der Merkmale zu erlangen. Derartige Ausrichtung der Merkmale in mehreren Dimensionen erfordert jedoch eine hohe Rechenleistung.

US 2018/143647 A1 offenbart ein Verfahren, bei dem eine Position eines autonom betriebenen Fahrzeugs innerhalb einer HD Karte bestimmt wird. Dabei wird eine 3D-Punktwolke der Objekte in der Umgebung des Fahrzeugs ermittelt, Merkmale aus der 3D-Punktwolke extrahiert und eine Ähnlichkeitsmetrik mit der HD Karte durchgeführt, um einen Bereich innerhalb der HD-Karte einzugrenzen. Anschließend wird eine Feinsuche in einer kleinen Teilmenge von Kandidatenzellen der HD Karte durchgeführt, die eine Zelle mit dem höchsten Ähnlichkeitswert zu finden und die genaue Position des Fahrzeugs zu bestimmen.

### Offenbarung der Erfindung

Die der Erfindung zugrunde liegende Aufgabe kann darin gesehen werden, ein Verfahren zum Ermitteln einer Ausgangspose eines Fahrzeugs vorzuschlagen, welches eine reduzierte Anforderung an eine Rechenleistung aufweist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Ermitteln einer initialen Pose bzw. Ausgangspose eines Fahrzeugs durch ein Steuergerät bereitgestellt.

Insbesondere kann das Verfahren durch ein Initialisierungsmodul des Steuergeräts in Form einer Hardware und/oder einer Software ausgeführt werden.

In einem Schritt werden von einer GNSS Sensorik und/oder einer Odometrie Sensorik ermittelte Messdaten empfangen und zum Ermitteln einer näherungsweisen Pose des Fahrzeugs mit einem Unsicherheitsbereich ausgewertet.

Für den ermittelten Unsicherheitsbereich wird mindestens eine Trajektorie von Verkehrsteilnehmern aus einer Trajektorienkarte extrahiert. Die mindestens eine extrahierte Trajektorie stellt beispielsweise eine übliche Trajektorie von Verkehrsteilnehmern aus historischen Daten dar.

In einem weiteren Schritt werden entlang der extrahierten Trajektorie Prüfpunkte angeordnet und es wird ein Optimierungsalgorithmus für jeden Prüfpunkt entlang der Trajektorie ausgeführt. Durch das Ausführen des Optimierungsalgorithmus kann eine merkmalsbasierte Lokalisierung bzw. Verfeinerung der näherungsweisen Pose durchgeführt werden. Hierzu können Messdaten einer Radarsensorik, einer LIDAR-Sensorik und/oder einer Kamerasensorik herangezogen werden und mit Daten einer digitalen Merkmalskarte verglichen werden. Dabei kann der Optimierungsalgorithmus von jedem Prüfpunkt aus kontinuierlich entlang der Trajektorie durchgeführt werden oder diskret für jeden festgelegten Prüfpunkt ausgeführt werden.

Anschließend werden durch den Optimierungsalgorithmus Posen mit korrespondierenden Kostenfunktionen ermittelt. Die Posen können beispielsweise lokale Maxima der Kostenfunktion darstellen.

Erfindungsgemäß werden von mindestens einem LIDAR-Sensor und/oder Radarsensor ermittelte Messdaten empfangen und ausgewertet. Anschließend werden Merkmale anhand der Messdaten ermittelt und mit Daten einer Merkmalskarte verglichen, um eine Pose des Fahrzeugs entlang der extrahierten Trajektorie in der Merkmalskarte zu bestimmen.

Es wird eine maximale Kostenfunktion einer Pose des Fahrzeugs basierend auf einer minimalen Abweichung der ermittelten Merkmale und der in der Merkmalskarte hinterlegten Merkmale durch den Optimierungsalgorithmus berechnet. Insbesondere kann eine von mehreren potentiellen Posen ausgewählt werden, welche eine höchste bzw. beste Kostenfunktion und damit eine beste Übereinstimmung der Merkmale aufweist.

Durch diese Maßnahme kann ein näherungsweiser bzw. grober Bereich bestimmt werden, welcher durch die merkmalsbasierte Lokalisierung weiter verfeinert wird. Hierdurch kann die Ausgangspose schneller und mit weniger Rechenoperationen ausgeführt werden, da der für die merkmalsbasierte Lokalisierung herangezogene Bereich durch den Unsicherheitsbereich der näherungsweise ermittelten Pose des Fahrzeugs begrenzt wird.

In einem weiteren Schritt wird aus den durch den Optimierungsalgorithmus ermittelten Posen eine Pose mit der größten Kostenfunktion als Ausgangspose des Fahrzeugs ermittelt.

Durch das Verfahren kann die für das Ermitteln der Ausgangspose erforderliche Rechenleistung gesenkt werden, da der Optimierungsalgorithmus mit einer verringerten Anzahl von notwendigen Funktionsaufrufen die Kostenfunktion optimieren kann. Insbesondere wird basierend auf den Informationen aus der Trajektorienkarte ein zweidimensionales Optimierungsproblem zu einem eindimensionalen Optimierungsproblem entlang der typischen extrahierten Trajektorien der Trajektorienkarte reduziert.

Der Optimierungsalgorithmus dient insbesondere dazu, aus Messdaten einer Umfeldsensorik extrahierte statische Merkmale mit Merkmalen aus einer Merkmalskarte zu vergleichen und somit eine präzise Ausgangspose des Fahrzeugs zu bestimmen. Hierzu können im Vorfeld Messdaten einer Umfeldsensorik, wie beispielsweise einer Radarsensorik, einer LIDAR-Sensorik und/oder einer Kamerasensorik, empfangen und ausgewertet werden, um statische Merkmale aus einem Fahrzeugumfeld zu extrahieren. Basierend auf den im Unsicherheitsbereich der näherungsweise ermittelten Pose empfangenen Abschnitten von Trajektorien aus der Trajektorienkarte können die statischen Merkmale mit den in der Merkmalskarte hinterlegten Merkmalen linear bzw. eindimensional entlang der Trajektorien verglichen werden. Durch diese Maßnahme kann die Ausgangspose schneller und mit geringem Rechenleistungsbedarf ermittelt werden.

Nach einem weiteren Aspekt der Erfindung wird ein Steuergerät bereitgestellt, wobei das Steuergerät dazu eingerichtet ist, das Verfahren auszuführen. Das Steuergerät kann beispielsweise ein fahrzeugseitiges Steuergerät, ein fahrzeugexternes Steuergerät oder eine fahrzeugexterne Servereinheit, wie beispielsweise ein Cloud-System, sein.

Die Begrenzung des Optimierungsproblems auf vordefinierte Trajektorien ist hierbei nicht auf die Ermittlung der Ausgangspose beschränkt. Vielmehr kann das Prinzip auch bei anderen Verfahren, wie beispielsweise einem Spurhalteassistenten angewandt werden.

Insbesondere kann das Steuergerät ein Lokalisierungsmodul und/oder ein Initialisierungsmodul aufweisen. Hierdurch kann das Steuergerät das Verfahren zum Ermitteln Ausgangspose des Fahrzeugs und/oder ein Verfahren zum Durchführen einer Lokalisierung ausführen.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen. Gemäß einem weiteren Aspekt der Erfindung wird ein maschinenlesbares Speichermedium bereitgestellt, auf dem das erfindungsgemäße Computerprogramm gespeichert ist.

Das Fahrzeug kann gemäß der BASt Norm assistiert, teilautomatisiert, hochautomatisiert und/oder vollautomatisiert bzw. fahrerlos betreibbar sein.

Das Fahrzeug kann beispielsweise als ein Personenkraftwagen, ein Lastkraftwagen, ein Robotaxi und dergleichen sein. Das Fahrzeug ist nicht auf einen Betrieb auf Straßen beschränkt. Vielmehr kann das Fahrzeug auch als ein Wasserfahrzeug, Luftfahrzeug, wie beispielsweise eine Transportdrohne, und dergleichen ausgestaltet sein.

Bei einer Ausführungsform wird aus der ermittelten ungefähren Pose des Fahrzeugs eine Ausrichtung des Fahrzeugs bestimmt und mit Fahrtrichtungen der extrahierten Trajektorien verglichen, wobei eine Filterfunktion zum ausschließlichen Berücksichtigen von Trajektorien mit Fahrtrichtungen durchgeführt wird, wobei mit der Ausrichtung des Fahrzeugs übereinstimmende Trajektorien berücksichtigt werde.

Durch diese Maßnahme können alle Abschnitte von Trajektorien im Unsicherheitsbereich entfernt werden, welche nicht mit einer Fahrtrichtung des Fahrzeugs übereinstimmen. Hierdurch kann der Optimierungsalgorithmus zusätzlich beschleunigt werden, da beispielsweise ein Abgleich von Merkmalen entlang von Trajektorien eines Gegenverkehrs vermieden wird.

Nach einer weiteren Ausführungsform wird als Optimierungsalgorithmus ein Bergsteigeralgorithmus ausgeführt. Hierdurch kann der Abgleich der aus Messdaten der Umfeldsensorik extrahierten statischen Merkmale mit Merkmalen aus der Merkmalskarte technisch besonders einfach und schnell umgesetzt werden. Die Kostenfunktion kann vorzugsweise bei einer größten Übereinstimmung der statischen Merkmale mit Merkmalen aus der Merkmalskarte maximal sein, wodurch ein mögliches Ziel des Optimierungsalgorithmus ein Finden von zumindest einem Maximum der Kostenfunktion ist.

Gemäß einem weiteren Ausführungsbeispiel wird der Optimierungsalgorithmus entlang der mindestens einen extrahierten Trajektorie innerhalb des ermittelten Unsicherheitsbereichs durchgeführt. Durch das Beschränken der Trajektorien auf den Unsicherheitsbereich der ermittelten Pose kann eine Länge der Abschnitte der Trajektorien weiter verringert werden.

Durch die Beschränkung der Länge der Abschnitte der Trajektorien kann ein Suchbereich bzw. Ausrichtungsbereich des Optimierungsalgorithmus weiter verringert und das Verfahren beschleunigt werden.

Nach einer weiteren Ausführungsform wird das Verfahren zum Ermitteln der Ausgangspose des Fahrzeugs in definierten zeitlichen Abständen wiederholt durchgeführt. Durch diese Maßnahme kann die Ausgangspose in regelmäßigen zeitlichen Abständen ermittelt und beispielsweise für Konsistenzprüfungen bzw. Validierungen einer parallelen Lokalisierungsfunktion herangezogen werden.

Gemäß einem weiteren Ausführungsbeispiel werden mehrere Ausgangsposen des Fahrzeugs zu unterschiedlichen Zeitpunkten ermittelt, wobei ein Abweichen des Fahrzeugs von einer Fahrspur oder ein Fahrspurwechsel durch Detektieren von Inkonsistenzen zwischen den ermittelten Ausgangsposen festgestellt wird. Weicht beispielsweise eine von mehreren ermittelten Posen von der Trajektorie und/oder von den älteren Posen ab, so kann eine Unstimmigkeit bzw. Inkonsistenz ermittelt werden.

Bei einer festgestellten Inkonsistenz kann ein Fahrspurwechsel des Fahrzeugs als Auslöser für die Inkonsistenz berücksichtigt werden. Durch diese Maßnahme können Fahrspurwechsel oder unbeabsichtigte Abweichungen von der Fahrspur detektiert werden.

Alternativ oder zusätzlich kann eine Inkonsistenz durch ein Abweichen der ermittelten Pose von einer extrahierten Trajektorie festgestellt werden. Dabei kann eine Toleranzabweichung vorgesehen sein, welche überschritten werden muss, um die Inkonsistenz festzustellen.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung auf eine Fahrbahn mit einem Unsicherheitsbereich einer näherungsweisen Pose und einer Vielzahl von Punkten zum Ausführen eines Optimierungsalgorithmus und
- Fig. 2: eine schematische Darstellung auf eine Fahrbahn mit einem Unsicherheitsbereich einer Pose und einer Vielzahl von Punkten zum Ausführen eines Optimierungsalgorithmus entlang von Trajektorien.

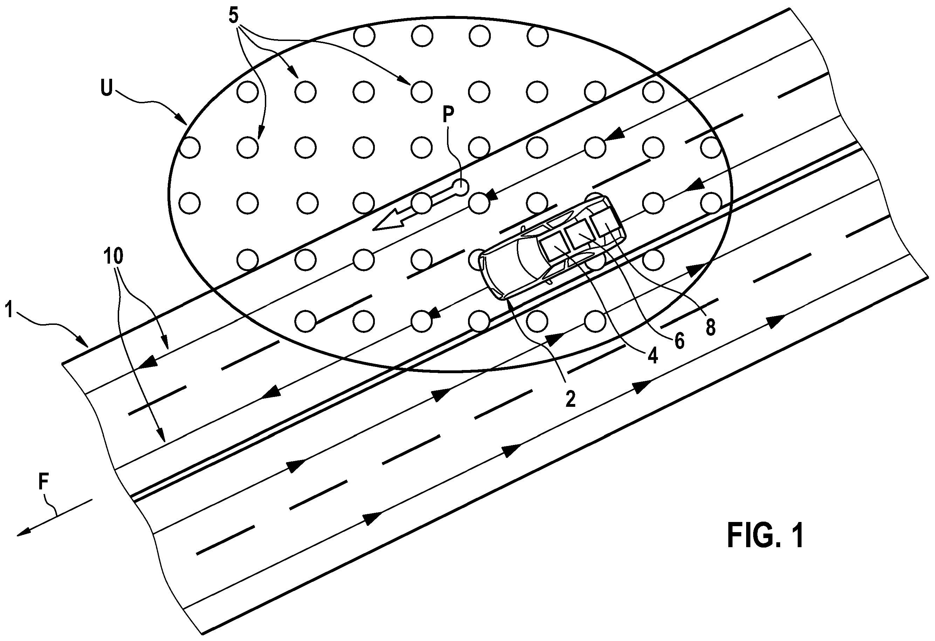

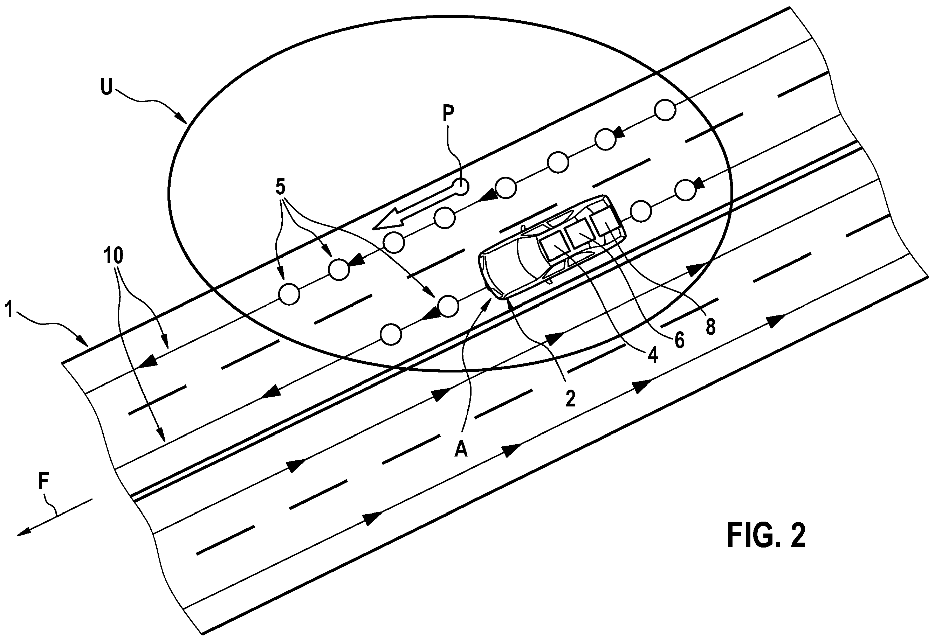

Die Figuren 1 und 2 zeigen schematische Darstellungen zum Veranschaulichen eines Verfahrens zum Ermitteln einer Ausgangspose A eines Fahrzeugs 2, welche bei einer nicht weiter beschriebenen Lokalisierung des Fahrzeugs 2 verwendbar ist. Die Ausgangspose A kann beispielsweise durch ein fahrzeugseitiges Steuergerät 4 ermittelt werden, welches das Verfahren ausführt.

Die Figur 1 zeigt eine schematische Darstellung auf eine Fahrbahn 1 mit einem Unsicherheitsbereich U einer näherungsweisen Pose P und einer Vielzahl von Prüfpunkten 5 zum Ausführen eines Optimierungsalgorithmus. Die Fahrbahn 1 wird in Fahrtrichtung F durch das Fahrzeug 2 befahren.

Das Fahrzeug 2 weist eine Odometriesensorik und/oder einer GNSS-Sensorik 6 sowie eine zusätzliche Sensorik 8 für eine merkmalsbasierte Lokalisierung. Die zusätzliche Sensorik 8 kann beispielsweise als eine LIDAR-Sensorik, eine Radarsensorik und/oder eine Kamerasensorik ausgestaltet sein.

Im dargestellten Ausführungsbeispiel werden während der Fahrt Messdaten durch die Odometriesensorik und die GNSS-Sensorik 6 gesammelt. Aus den Messdaten der Odometriesensorik und der GNSS-Sensorik 6 wird eine näherungsweise Pose P bestimmen. Da die näherungsweise Pose P fehlerbehaftet ist, ist schematisch ein Unsicherheitsbereich U der näherungsweisen Pose P dargestellt.

Dabei können die Prüfpunkte 5 über den gesamten Unsicherheitsbereich U verteilt werden. Ausgehend von den Positionen der Prüfpunkte 5 kann ein Optimierungsalgorithmus ausgeführt werden. Um den Optimierungsalgorithmus jedoch zu beschleunigen werden Trajektorien 10 aus einer Trajektorienkarte extrahiert, welche durch den Unsicherheitsbereich U verlaufen.

Anschließend werden die Prüfpunkte 5 entlang der extrahierten Trajektorien 10 angeordnet, sodass der Optimierungsalgorithmus für jeden Prüfpunkt 5 und entlang der Trajektorien 10 ausgeführt wird. Hierdurch kann der Berechnungsaufwand des Optimierungsalgorithmus von einem zweidimensionalen auf ein eindimensionales Problem reduziert werden. Dieser Schritt ist in der Figur 2 dargestellt.

Die Figur 2 zeigt eine schematische Darstellung auf die Fahrbahn 1 mit einem Unsicherheitsbereich U einer Pose und einer Vielzahl von Prüfpunkten 5 zum Ausführen des Optimierungsalgorithmus entlang von Trajektorien 10.

Basierend auf den historischen Daten der Trajektorienkarte ist die Wahrscheinlichkeit für das Fahrzeug 2 entlang einer der extrahierten Trajektorien 10 am wahrscheinlichsten. Somit wird der Optimierungsalgorithmus entlang der extrahierten Trajektorien 10 ausgeführt.

Beim Ausführen des Optimierungsalgorithmus werden vorzugsweise von der Umfeldsensorik 8 ermittelte Messdaten empfangen und ausgewertet.

Es werden statische Merkmale anhand der Messdaten ermittelt und mit Daten einer Merkmalskarte verglichen. Der Optimierungsalgorithmus dient insbesondere dazu die statischen Merkmale mit Merkmalen der Merkmalskarte anzugleichen und eine Kostenfunktion zu maximieren.

Die Kostenfunktion wird maximal, wenn die extrahierten statischen Merkmale optimal mit den Merkmalen der Merkmalskarte übereinstimmen.

Eine von mehreren möglichen Posen des Fahrzeugs 2, welche eine maximale Kostenfunktion aufweist, wird als eine Ausgangspose A ermittelt und für eine weitere Lokalisierung des Fahrzeugs 2 eingesetzt.

## Patentansprüche

1. Verfahren zum Ermitteln einer Ausgangspose (A) eines Fahrzeugs (2) durch ein Steuergerät (4), wobei
- von einer GNSS Sensorik und/oder einer Odometrie Sensorik (6) ermittelte Messdaten empfangen und zum Ermitteln einer näherungsweisen Pose (P) des Fahrzeugs (2) mit einem Unsicherheitsbereich (U) ausgewertet werden,
- für den ermittelten Unsicherheitsbereich (U) mindestens eine Trajektorie (10) von Verkehrsteilnehmern aus einer Trajektorienkarte extrahiert wird,
- entlang der extrahierten Trajektorie (10) Prüfpunkte (5) angeordnet werden und ein Optimierungsalgorithmus für jeden Prüfpunkt (5) entlang der Trajektorie (10) ausgeführt wird,
- durch den Optimierungsalgorithmus Posen mit korrespondierenden Kostenfunktionen ermittelt werden,
- aus den durch den Optimierungsalgorithmus ermittelten Posen eine Pose mit einer maximalen Kostenfunktion als Ausgangspose (A) des Fahrzeugs (2) ermittelt wird, wobei
- zum Durchführen des Optimierungsalgorithmus für jeden Prüfpunkt von mindestens einem LIDAR-Sensor und/oder Radarsensor (8) und/oder Kamerasensor ermittelte Messdaten empfangen und ausgewertet werden, Merkmale anhand der Messdaten ermittelt und mit Daten einer Merkmalskarte verglichen werden, um eine Pose des Fahrzeugs (2) entlang mindestens einer extrahierten Trajektorie (10) in der Merkmalskarte zu bestimmen, und eine maximale Kostenfunktion einer Pose des Fahrzeugs (2) basierend auf einer minimalen Abweichung der ermittelten Merkmale und der in der Merkmalskarte hinterlegten Merkmale durch den Optimierungsalgorithmus berechnet wird.

2. Verfahren nach Anspruch 1, wobei aus der ermittelten ungefähren Pose (P) des Fahrzeugs (2) eine Ausrichtung des Fahrzeugs (2) bestimmt und mit Fahrtrichtungen (F) der extrahierten Trajektorien verglichen wird, wobei eine Filterfunktion zum ausschließlichen Berücksichtigen von Trajektorien (10) mit Fahrtrichtungen (F) durchgeführt wird, wobei mindestens eine mit der Ausrichtung des Fahrzeugs (2) übereinstimmende Trajektorie (10) berücksichtigt wird.

3. Verfahren nach Anspruch 1 oder 2, wobei als Optimierungsalgorithmus ein Bergsteigeralgorithmus ausgeführt wird.

4. Verfahren nach einem der Ansprüche 1 bis 3, wobei der Optimierungsalgorithmus entlang der mindestens einen extrahierten Trajektorie (10) innerhalb des ermittelten Unsicherheitsbereichs (U) durchgeführt wird.

5. Verfahren nach einem der Ansprüche 1 bis 4, wobei das Verfahren zum Ermitteln der Ausgangspose (A) des Fahrzeugs (2) in definierten zeitlichen Abständen wiederholt durchgeführt wird.

6. Verfahren nach Anspruch 5, wobei mehrere Ausgangsposen (A) des Fahrzeugs (2) zu unterschiedlichen Zeitpunkten ermittelt werden, wobei ein Abweichen des Fahrzeugs (2) von einer Fahrspur oder ein Fahrspurwechsel durch Detektieren von Inkonsistenzen zwischen den ermittelten Ausgangsposen (A) festgestellt wird.

7. Steuergerät (4), wobei das Steuergerät (4) dazu eingerichtet ist, das Verfahren gemäß einem der Ansprüche 1 bis 6 auszuführen.

8. Computerprogramm, welches Befehle umfasst, die bei der Ausführung des Computerprogramms durch einen Computer oder ein Steuergerät (4) diese veranlassen, das Verfahren gemäß einem der Ansprüche 1 bis 6 auszuführen.

9. Maschinenlesbares Speichermedium, auf welchem das Computerprogramm gemäß Anspruch 8 gespeichert ist.

## Claims

1. Method for determining an initial pose (A) of a vehicle (2) by means of a control unit (4), wherein
- measurement data determined by a GNSS sensor system and/or an odometry sensor system (6) are received and evaluated in order to determine an approximate pose (P) of the vehicle (2) with a margin of uncertainty (U),
- at least one trajectory (10) of road users is extracted from a trajectory map for the determined margin of uncertainty (U),
- test points (5) are arranged along the extracted trajectory (10) and an optimization algorithm is executed for each test point (5) along the trajectory (10),
- poses with corresponding cost functions are determined by the optimization algorithm,
- from the poses determined by the optimization algorithm, a pose with a maximum cost function is determined as the initial pose (A) of the vehicle (2), wherein
- for the purpose of carrying out the optimization algorithm for each test point, measurement data determined by at least one LIDAR sensor and/or radar sensor (8) and/or camera sensor are received and evaluated, features are determined on the basis of the measurement data and are compared with data of a feature map in order to ascertain a pose of the vehicle (2) along at least one extracted trajectory (10) in the feature map, and a maximum cost function of a pose of the vehicle (2) is calculated by the optimization algorithm on the basis of a minimum deviation of the determined features and the features stored in the feature map.

2. Method according to Claim 1, wherein an orientation of the vehicle (2) is ascertained from the determined approximate pose (P) of the vehicle (2) and is compared with travel directions (F) of the extracted trajectories, wherein a filter function for exclusively taking account of trajectories (10) with travel directions (F) is carried out, wherein at least one trajectory (10) corresponding to the orientation of the vehicle (2) is taken into account.

3. Method according to Claim 1 or 2, wherein a hill-climbing algorithm is executed as the optimization algorithm.

4. Method according to any of Claims 1 to 3, wherein the optimization algorithm is carried out along the at least one extracted trajectory (10) within the determined margin of uncertainty (U).

5. Method according to any of Claims 1 to 4, wherein the method for determining the initial pose (A) of the vehicle (2) is carried out repeatedly at defined time intervals.

6. Method according to Claim 5, wherein a plurality of initial poses (A) of the vehicle (2) are determined at different times, wherein a deviation of the vehicle (2) from a lane or a lane change is established by detecting inconsistencies between the determined initial poses (A).

7. Control unit (4), wherein the control unit (4) is designed to execute the method according to any of Claims 1 to 6.

8. Computer program comprising instructions which, when the computer program is executed by a computer or a control unit (4), cause same to execute the method according to any of Claims 1 to 6.

9. Machine-readable storage medium on which the computer program according to Claim 8 is stored.

## Revendications

1. Procédé de détermination d'une pose initiale (A) d'un véhicule (2) à l'aide d'un dispositif de commande (4), dans lequel
- des données de mesure déterminées par un système de capteur GNSS et/ou un système de capteur d'odométrie (6) sont reçues et évaluées afin de déterminer une pose approximative (P) du véhicule (2) présentant une marge d'incertitude (U),
- au moins une trajectoire (10) d'usagers de la route est extraite d'une carte de trajectoires pour la marge d'incertitude (U) déterminée,
- des points de test (5) sont disposés le long de la trajectoire (10) extraite et un algorithme d'optimisation est exécuté pour chaque point de test (5) le long de la trajectoire (10),
- des poses associées à des fonctions de coût correspondantes sont déterminées par l'algorithme d'optimisation,
- une pose présentant une fonction de coût maximale est déterminée à partir des poses déterminées par l'algorithme d'optimisation en tant que pose initiale (A) du véhicule (2), dans lequel
- des données de mesure déterminées pour chaque point de mesure par au moins un capteur LIDAR et/ou un capteur radar (8) et/ou un capteur de caméra sont reçues et évaluées pour exécuter l'algorithme d'optimisation, des caractéristiques sont déterminées sur la base des données de mesure et comparées à des données d'une carte de caractéristiques, afin de déterminer une pose du véhicule (2) le long d'au moins une trajectoire (10) extraite dans la carte de caractéristiques, et une fonction de coût maximale d'une pose du véhicule (2) est calculée par l'algorithme d'optimisation sur la base d'un écart minimal des caractéristiques déterminées et des caractéristiques mémorisées dans la carte de caractéristiques.

2. Procédé selon la revendication 1, dans lequel une orientation du véhicule (2) est déterminée à partir de la pose approximative (P) déterminée du véhicule (2) et comparée à des directions de conduite (F) des trajectoires extraites, une fonction de filtrage étant exécutée pour tenir compte exclusivement des trajectoires (10) associées à des directions de conduite (F), au moins une trajectoire (10) correspondant à l'orientation du véhicule (2) étant prise en compte.

3. Procédé selon la revendication 1 ou 2, dans lequel un algorithme de montée de pente est exécuté en tant qu'algorithme d'optimisation.

4. Procédé selon l'une des revendications 1 à 3, dans lequel l'algorithme d'optimisation est exécuté le long de ladite au moins une trajectoire (10) extraite dans les limites de la marge d'incertitude (U) déterminée.

5. Procédé selon l'une des revendications 1 à 4, **caractérisé en ce que** le procédé de détermination de la pose initiale (A) du véhicule (2) est exécuté plusieurs fois à des intervalles de temps définis.

6. Procédé selon la revendication 5, dans lequel plusieurs poses initiales (A) du véhicule (2) sont déterminées à des instants différents, un écart du véhicule (2) par rapport à une voie ou un changement de voie étant déterminé par détection d'incohérences entre les poses initiales (A) déterminées.

7. Dispositif de commande (4), le dispositif de commande (4) étant conçu pour mettre en œuvre le procédé selon l'une des revendications 1 à 6.

8. Programme informatique comprenant des instructions qui, lorsque le programme informatique est exécuté par un ordinateur ou un dispositif de commande (4), amènent ce dernier à mettre en œuvre le procédé selon l'une des revendications 1 à 6.

9. Support de stockage lisible par machine sur lequel est stocké le programme informatique selon la revendication 8.
